# EUROPEAN PATENT APPLICATION

(11) **EP 4 682 799 A1**
(43) Date of publication of application: **21.01.2026**
(21) Application number: 25175861.1
(22) Date of filing: 12.05.2025
(51) Int. Cl.: G06Q 10/30

(54) **MATERIAL RECLAIM**

(30) Priority: 19.07.2024 GB 202410603
(71) Applicant: CNC Group Holdings Limited, Birmingham West Midlands B44 9ER (GB)
(72) Inventor: Coleman, Mark, Birmingham, B44 9ER (GB)
(74) Representative: Adamson Jones

(57) **Abstract**

There is disclosed a method and system for reclaiming and reusing structural members from an existing structure. A scan of the structural members is conducted in-situ to determine the geometry, position, and one or more material property of the structural members. Structural members are to be reclaimed for reuse are identified from the scan. An identifier is assigned to said identified structural members in the structure. The structural members are catalogued in a structural member database. A demolition schedule is created based on the structural member database prior to reclaiming the identified structural members from the structure. The database can be interrogated for structural members that satisfy a future need. The suitability of the structural members in the database for said future need is verified and the structural members can then be repurposed for the specified use. A server system may comprise the structural member database containing data fields for a composition, one or more dimension and a condition for the structural members. The server is arranged to output a material passport and/or certificate for verifying the structural members for re-use. The structural members are typically steel members of a building to be demolished.

## Description

The present invention concerns a method of reclaiming material from a structure for reuse, particularly, although not exclusively, steel members from buildings.

### Introduction

The construction industry faces a significant challenge in managing the environmental impact of building materials. When buildings reach the end of their useful life, the structural components will typically be recycled, e.g. through melting of steel components and forming into new steel components. Whilst recycling of material is prevalent, it is not without drawbacks.

Recycling of structural components can slow down the demolition process since individual structural components need to be removed from other materials. The process of recycling still bears a significant carbon footprint, albeit it less than the environmental impact of producing virgin steel products. This is because the process of melting/reforming steel is highly energy-intensive and consumes a significant amount of resources and emits greenhouse gases.

Furthermore, there are complexities in handling the wide variety of materials of the structural components that are removed, whereby the material makeup of individual structural components may be suitable for some recycling purposes but not others. The use of recycled material in forming new products affects the material properties of that new product, depending on the amount of recycled material that is used. It is often not be appropriate to use recycled steel for new construction projects, perpetuating the cycle of resource extraction and production.

It has been found that steel that is well maintained can often be reused, even as structural support members in new buildings without having to be re-cast or other substantial re-working. However, the process of reclaiming steel from an existing structure is often not straightforward, can add to costs, and requires extensive auditing meaning it typically isn't financially worthwhile. Furthermore, the quality and characteristics of the steel is uncertain meaning reclaimed steel members can't necessarily be reused as structural members in a new building and that the value of such members is therefore diminished, making it less financially attractive to reclaim those members from an existing building.

It is the aim of the present invention to mitigate or eliminate one or more of the above-mentioned problems.

### Summary of invention

According to one aspect of the invention there is a method of reclaiming steel members for reuse as defined in claim 1. Some optional features are defined by way of the dependant claims.

The reclaimed structural members typically comprise metallic, e.g. steel, structural members.

Repurposing of reclaimed structural steel components has been estimated to use in the region of 95% less carbon than equivalent virgin/mined steel components and in the region of 60% less carbon than recycled steel components. For example, when it is considered that new steel products may account for in the region of 1.85 tonnes of carbon emissions per one tonne of steel produced, it will be appreciated that the savings in emissions/energy consumption for repurposed steel components can be very significant.

Therefore, the re-purposing of steel structural components can play an important role in a move towards a circular economy, particularly within the fields of construction and civil engineering.

The method may comprising conducting testing on the structural member once it has been reclaimed from the building and the structural member database may be updated accordingly.

According to a further aspect of the invention, there is provided a method of reclaiming and reusing structural members from an existing structure, comprising the steps of: conducting a scan of the structural members in-situ to determine the geometry, position, and one or more material property of the structural members; identifying which structural members are to be reclaimed for reuse; assigning an identifier to said identified structural members in the structure; cataloguing the structural members in a structural member database; creating a demolition schedule based on the structural member database and reclaiming structural members from the structure; interrogating the database for structural members that satisfy a future need; and, verifying suitability of the structural members in the database for said future need and then reusing the steel members.

According to another aspect of the invention there is a method of reclaiming material in an existing structure for reuse, comprising the steps of: assigning a unique identifier to material to be reclaimed; cataloguing the material in a material database; conducting a first inspection or testing to determine both the position and a condition or property of the material; reclaiming the material; conducting further inspection or testing to verify the condition or a property of the material for reuse.

The material may comprise a member, such as a structural member of the structure, e.g. a building. The member may be embedded in an existing structure. The material may comprise a metallic structural member, such as a beam, column, rafter, strut or frame member.

The invention introduces a comprehensive framework for reclaiming steel members from demolished buildings and re-assigning those steel members for re-use. The invention may provide for verification of the steel members such that they are certified for specific re-use, e.g. in a manner that is auditable and compliant in a way that has not been hitherto possible.

The invention may facilitate cataloguing of structural components and/or generation of a materials passport logging/documenting the life of the component, e.g. including the age or operational life of the components and/or any material/structural changes made to the component. A log of changes may comprise details of work carried out on the component, e.g. including when and by whom. The information included in the cataloguing/passport may comprise any test results for the structural component.

The proposed method addresses the challenges of material disposal by promoting the reuse of structural steel from deconstructed buildings. Rather than treating demolished steel as waste or a low value by-product of the demolition process, the proposed method promotes the reclaiming of material by viewing buildings as material banks. The process of reclaiming steel in the manner proposed herein may be referred to as an example of so-called 'urban mining'. By reclaiming steel from existing structures, the demand for new steel production, e.g. in construction, can be significantly reduced, minimising environmental impact.

The carbon footprint for reclaimed steel is dramatically lower than new steelwork, estimated at approximately 50kg and 1850kg of CO2 per tonne respectively. Hence the proposed method not only contributes to a more sustainable practice but is also offers a massive reduction in carbon emissions.

Reclaimed steel also offers potential cost savings when compared to sourcing new steelwork. By reusing existing steel members, project budgets can be optimised without compromising structural integrity.

The method may comprise scanning, assessing or identifying the material/member, e.g. in-situ or within the existing building. The method may comprise scanning or identifying one or more property of the material/member in-situ and/or once removed from the building. The method may comprise remotely scanning or identifying a feature/property of the member. Any such step may be carried out to determine or verify the re-usability of the material/member.

The method may comprise scanning the geometry of the member. A three-dimensional scan may be taken. A point cloud scan may be taken. A geometric model of the member may be created.

The method may comprise positive material identification for the structural member, e.g. in situ. The method may comprise determination of elemental composition of the structural member. The method may comprise non-destructive testing, such as X-ray fluorescence (XRF) testing.

The method may comprise determining a tolerance or deviation in the geometry of the member from a nominal or ideal geometry. The method may comprise comparing a profile or three-dimensional geometry of the member to the nominal or ideal geometry. Any deviation therefrom may be identified and/or assessed to determine whether it lies within an allowable tolerance or threshold.

The method may or may not comprise determining one or more material characteristic of the member. The method may or may not comprise determining a chemical composition of the member. The method may or may not comprise determining the age of the member and/or building.

The method may comprise assessing the material/member in situ (i.e. before demolition) to determine its suitability for reclamation and/or re-use.

The method may comprise logging evidence of the condition of the member.

The method may comprise entering any, any combination, or all of the determined characteristics, properties or geometric features of the member in the database.

The method may comprise planning a demolition sequence for the building based on the reclaimable members identified in the building, e.g. including their location in the building and/or function in the building. The method may comprise determining a sequence of removal of each structural member, e.g. in turn. The method may comprise deconstructing the building by removing loading on each load-bearing member of the building to be reclaimed in sequence. The method may comprise unfastening or severing the member from the structure of the building.

The method may comprise identifying a fastening of the member to the building structure. The method may comprise identifying whether the member is unfasten-able, e.g. without severing the member.

The method may comprise severing and/or segregating the member. The method may comprise determining a portion of the member that is unsuitable for reuse and subsequently segregating the member, e.g. to remove said portion.

The method may comprise separating the structural member from the structure via unbolting, mechanical shearing, sawing, hot cutting, or a combination thereof.

The method may comprise applying a machine-readable tag, such as an RIFD tag, to the structural member which corresponds to the identifier of the structural member.

The identifier may be applied to a plurality of structural members such as to define a group of structural members having similar characteristics.

The method may comprise maintaining a searchable database of any identified members that are reclaimed or to be reclaimed. The method may comprise entering one or more first property of a member that has been identified in situ. The method may comprise entering one or more further property of said member once reclaimed.

The method may comprise querying the database for a member having one or more attribute or property for reuse.

The method may comprise logging a need for one or more member for a construction project. The method may comprise matching a member that has been identified or assessed in situ within an existing building/structure to be demolished with said need (e.g. prior to reclamation).

The invention may beneficially allow needs for structural members that will be required for new builds to be matched with reclaimed members from demolished buildings, or else members yet to be reclaimed within buildings that are to be demolished. This means structural frame members, beams or the like can be earmarked for reuse and removed from a building in a manner that facilitates verification and reuse of the member, e.g. without damage or deterioration of the member. As such, the demolition job can be designed around an understanding of the value of certain structural members within an existing structure.

Once removed from the previous building, the structural members may be provided with a unique code, such as a readable tag or readable visual code such that the structural members can be identified and/or verified for a future use.

According to a further aspect of the invention, there is provided a method of verifying a structural member of a building for reclamation or reuse comprising identifying and determining one or more property of the structural member in situ, reclaiming the structural member during demolition of the building, subsequently determining one or more further property of the structural member or validating the previously determined property, and cataloguing the structural member with a unique ID and said properties in a searchable database.

According to another aspect of the invention, there is provided a method of matching needs for structural members on new building projects with reclaimed or reclaimable structural members from existing buildings by using the method of reclaiming material or the method of verifying the structural members according to the preceding aspects.

According to a further aspect of the invention, there is provided a system for reclamation and reuse of structural members of buildings using the method of the first aspect, the system comprising a database containing properties of structural members and a unique ID for each structural member that has been reclaimed from a building, or is to be reclaimed from a building.

According to a further aspect, there is provided a system for reclaiming structural members, comprising
a server system comprising the structural member database of any preceding claim the database containing data fields for a composition, one or more dimension and a condition for the structural members,
an input terminal in communication with the server and configured to update the structural member database,
one or more output terminals in communication with the server and configured to submit a search query to the structural member database.

The server may flag data fields in the database that are required to be populated or verified in order to satisfy the search query.

The server may be arranged to output a material passport and/or certificate for verifying the structural members for re-use.

Any of the optional or essential features defined in relation to any one aspect of the invention above may be applied to any further aspect, wherever practicable. Those optional feature combinations have not been explicitly repeated only for conciseness. Whilst any aspect of the invention may refer specifically to 'steel' members, it will be appreciated that other metallic or composite structural members could be reclaimed using the same or similar techniques.

Workable embodiments of the invention are described in further detail below, by way of example only, with reference to the accompanying drawings, of which:
**Figure 1** shows a network in which the invention may be used.
**Figure 2** shows a general process for reclaiming structural members from buildings.
**Figures 3a** **and** **3b** show a more-detailed process for reclaiming structural members for re-use.

### Detailed description

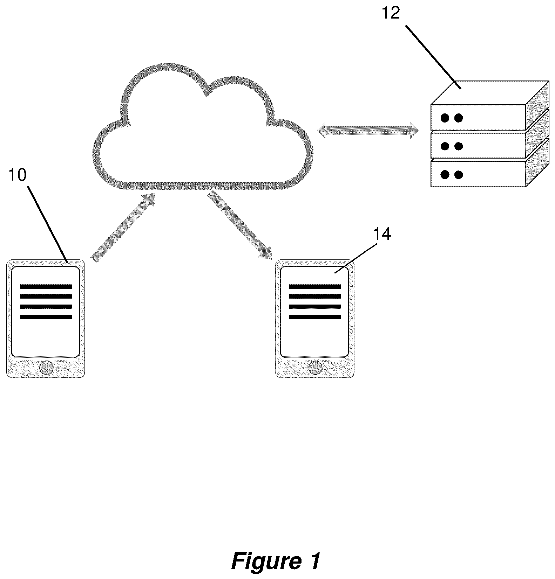

With reference to figures 1-3, the system provides a method to reclaim and reuse steel/structural members from existing structures for use in future projects, e.g. allowing planning for reuse of those members even before demolition of the existing building has been undertaken. Users of the system can source suitable steel by criteria, such as composition, geometry, functional characteristics, location, etc, thereby reducing cost and burden for the production of new steel when suitable reclaimed steel could be used.

Furthermore, a demolition schedule of a structure can be created and implemented based on the current or expected demand of the steel members within a building. The overall system therefore improves the utilisation of existing steel, reducing the demand and environmental burden of manufacturing new steel products or reforming recycled steel.

Figure 1 shows a schematical representation of a network configured for the reclaim and reuse of steel material from a building. The network comprises a first user computing device 10 which allows users to upload data pertaining to steel members for potential reclaiming. The data is transmitted via a local or wide area network to be a centralised server or a cloud-based storage facility 12 having a steel member database. Hence the user of the first user device 10 may be the owner (or typically an agent working on behalf of the owner) of building/structure which is to be demolished.

A second user device 14 connects to the cloud and is configured to retrieve information from the steel member database. Users can select suitable steel according to their criteria and send a request for the desired steel which is then transmitted to the server 12 or used to interrogate the database maintained by the server 12. Hence the user of the second user device may be an engineer, architect, builder or developer looking to source steel members for use in a new project of defined scope.

The server 12 comprises a data store configured to store the steel member database and one or more computing device controlling access and processing requests to update or interrogate the database, e.g. according to receiving data requests from the first and/or second user devices. It should be clear that there will be plurality of first 10 and second 14 user devices. The server 12 will administer suitable security measures to control access to the database for retrieving information and updating the database.

The user device 10 may comprise an interface for scanning equipment to be used on site when identifying structural components of a building to be demolished as will be described below. The user devices 10 and 12 may comprise conventional computing and/or communication equipment, such as smartphones, laptops, tablets or other personal computing equipment.

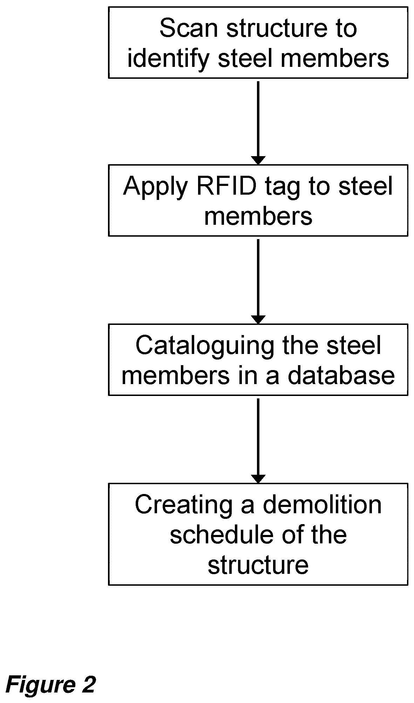

Figure 2 shows a representation of selected parts of a reclaiming process, specifically, identifying the steel members within a building, cataloguing and creating a demolition schedule based on the members to be recovered.

### Identification

A preliminary assessment is made of the structure, which may be a building, ship or any steel containing manmade structure. The invention is well suited to structures in which the steel forms a structural component of the fabric of the building, e.g. being embedded within other building materials, such as concrete/cement, brickwork, cladding, plaster, aggregate, insulation, and the like. The steel may be provided in the form of a steel framework or as individual steel members, such as beams within the existing structure. As such, it may have a widely differing impact on the structural integrity of the existing building.

The preliminary assessment is to identify steel structures and determines the location, geometry and material characteristics of the steel members within the structure in-situ, meaning the assessment can be made while the structure is still in use. The scanning equipment is passive and non-destructive meaning it can identify and characterise the steel in a detailed and reliable manner without disruption, i.e. without exposing or requiring the steel to be visible. The steel is categorised based on its properties and recorded in a database of suitable steel for reclaiming and reuse.

A point cloud survey PCS is conducted to assess geometry. This may be used to form a geometric/mathematical model, for example a BIM model, of the structure, e.g. including the location and/or geometry/shape of the steel member. A scanning device uses lasers to build a detailed and precise 3D point cloud/Building Information Model (BIM). The method involves rotating a pulsed light source and measuring the reflections with a sensor. A determination of the geometries and position of the steel members can be made by measuring the amount of time it takes light to be detected by the detector. Importantly the shape and dimensions from the structure can be determined.

In most applications, the steel members being reclaimed will be I-beams or H-beams however they can be any shape, such as box section or other shapes.

The location of the steel structural members within the context of the existing structure is therefore captured, i.e. relative to the remainder of the structure and/or other structural members. The model of the structure, including which steel members are to be reclaimed, may be particularly important in planning the demolition of the structure to reclaim such members in-tact.

The initial assessment or survey determines the dimensions of the members, for example, length, width, and height of the members. The initial assessment may determine a profile/shape or other geometric feature of the steel members.

The geometric model produced by the PCS can be used for making an initial assessment of whether the steel has been damaged making it no longer suitable for reuse. For example, it can be determined where warping, twisting, necking, fatigue, bending and/or bucklering has occurred. This may be achieved by comparing the scanned shape with the predetermined or nominal/ideal form, typically a straight beam. Deviations from the nominal form can be quantified and processed to determine whether they lie within an allowable threshold/tolerance of the nominal model. Deviations which lie beyond the threshold can be logged and the steel member identified as being suitable only for recycling, i.e. rather than reuse.

Derivations or areas of non-uniformity from the expected shape can be detected and highlighted for closer inspection. AI may be employed to detect areas of non-uniformity from a determined shape. For example, an average cross-sectional shape of a beam can be determined by making measurements of a steel beam along its length, continuously or at predetermined intervals. Areas which deviate from the expected form by a predetermined amount, i.e. distance or angle are identified. Alternatively, the AI may refer to a database of steel member shapes of cross-sections, i.e. a I-beam, H-beam, square or circular, determine which shape the steel member corresponds to, and determines if there are substantial deviations in regions of that member.

In the event that a localised deviation is determined, i.e. which does not affect a substantial portion of the steel member, that portion of the member may be flagged for removal/segregation from the remainder of the beam. Thus it could be logged that a portion/length of a scanned member is intended for reuse, if not the whole member.

In addition to geometric assessment, it is possible to assess the condition of structural members in situ in other ways. For example, techniques exist for stress testing in situ, or determination of stress concentrations, if needed.

The material composition of the structural members is assessed in situ also. X-ray fluorescence scanners are used in the current example to determine the composition of the steel members. AI can be used to match the alloy against a class of known alloys.

The survey i.e. the scans can be conducted by user operating the devices manually or by one or more drone/robot equipped with scanners.

The preliminary assessment can also determine the age of construction of the building and/or structural members therein. If the structure was constructed before 1970 in the UK then the steel may not be reusable in a new building due to changes in the necessary building standards, which may not implicitly have been met. As such, any steel to be recovered from those building may be flagged for a further set of material tests to be carried out before it can be determined whether the steel is reusable, e.g. and for what purpose, or whether it is to be sent away for recycling.

Using the above preliminary assessment techniques, a variety of data fields for each steel member in the existing structure can be captured and logged in the database. Any, any combination, or all of the above discussed characteristics of the structural members may be captured in situ to populate the database and provide initial information on the material passport for each structural member.

### Tagging

RFID tags are applied to each identified steel member that is to be reclaimed, the tag corresponding to a unique identifier and recorded in the steel member database. Steel members of a similar type, i.e. composition, use and/or dimensions can be grouped into the same unique identifier or could be provided with different identifiers.

The tag can be applied directly to the steel member where visible, or indirectly, for example to a covering or adjacent wall/fixture. The tag can be applied as a sticker for convenience. Other forms of tag could be used, provided they are readable to confirm the data associated with the steel member.

Alternative means of capturing/reading the data can be used, for example, QR codes, alphanumeric numbering, colour marking, stickers, or other types of branding.

### Cataloguing

The steel members are catalogued on the steel member database by their unique identifier, such they can be readily identified. Specifically, their (geographic) location, age, composition, condition, geometry and availability are recorded as fields on the steel member database. The fields of the database may be text fields, number fields, image fields, file fields (i.e. suitable for CAD models, spreadsheets, pdfs etc).

Some fields may not be populated due to the information not being available to the user at a given time, e.g. specialist testing maybe required to determine the composition of the alloy. Such fields can be left blank or updated when necessary. The database may provide alerts/reminders for additional information or testing required to complete the database entry.

The cataloguing may be inputted by the first user device. In some embodiments, the scans of the steel member are included in the steel member database. For example, parts of the BIM model that relate to specific steel member. AI can be used to extract and populate the relevant fields based on the BIM/CAD model of the building.

AI or automation may be used reduce to reduce the burden on the user. For example, potentially suitable steel members can be identified, assigned a unique identifier and/or catalogued from the scanned data, eg. from the BIM model or other such models. For example, AI may be able to determine position and geometries of steel members from a single BIM or CAD model of the building, and extract information therefrom, create a record in the steel member database and populate the fields where possible.

The preliminary assessment described above captures a first set of information for the structural members of an existing structure in situ. Various decisions can be made based on access to this initial set of information. However it will be understood that further information about the member will be attained after the member has been reclaimed in order to verify or validate its suitability for reuse.

### Demolition schedule

A tailored demolition schedule can be created based on the steel member database, i.e. the steel members to be reclaimed. A demolition agent, e.g. which may comprise a software application, connects to the steel member database and creates a demolition schedule to remove selected members in an order that is safe and preserves the integrity of the members identified for reclamation in the database (i.e. by the preliminary assessment).

In practice this will be in the form of a list or operation schedule indicating which members can be removed and when (i.e. which order). The schedule also indicates what machinery is required and where. For example, the schedule may specify where lifting/handling equipment is needed on site for removal of the steel which may need to be sympathetic to demolition equipment used to impact or degrade other structures in/around the steel. The location, size/extent and/or weight of the steel member may feed into the demolition schedule. It is important to note that the schedule may thus differ from a conventional schedule that is optimised for other reasons (e.g. efficiency, etc.) since the schedule according to the invention will list the order in which the steel members are to be reclaimed and their location in the building.

In examples of the invention, the manner in which the steel member is fastened to the structure, e.g. to other steel members or other structural portions of the building, is logged and forms an input to the demolition schedule. Specifically, the process may determine whether unfastening of steel member is feasible or else whether cutting of the steel member is required.

The demolition schedule may comprise machine instructions which may be configured to automate all or parts of the demolition. For example, one or a plurality of demolition machines may be controlled remotely by a computing device according to the schedule. Additionally or alternatively, sequences of machinery operation or setting for those machines may be assigned.

The demolition agent determines if auxiliary equipment is required, for example, support members, mechanical handlers (to minimise impact damage moving the members), conveyors/manipulators, and/or temporary support members configured to provide structural support upon removal of certain steel members.

### Recovery

The recovered members are removed from the building in a controlled manner to ensure the integrity of the member is maintained and minimise damage. Recovery of the members may be handled manually or by an automated recovery agent configured to automate all or parts of the procedure.

Recovery handling equipment is utilised manually (i.e. by persons in direct or remote control) or under the direction of the recovery agent. The recovery handling equipment may include mechanical handlers and lifting equipment, such as cranes, etc.

During this process, to maintain the members structural integrity, it is important that:
- no undue stresses are placed on the member (e.g. single point lifting should not occur and multipoint or spreader beams should be used),
- the steelwork members are kept as straight as possible and not twisted or bent,
- no holes cut into the member,
- members should be free from discontinuities (imperfections and defects) except for tolerable discontinuities agreed by the steel stockholder/fabricator.

### Post-recovery inspection and processing

The recovered members are moved to a temporary storage and processing area where they are inspected and verified against the initial scans, i.e. to validate the composition, geometry, quality, age etc. The inspection also determines if the members were damaged during recovery.

The features of the steel member are checked against those stored in the steel member database by using the RFID (i.e. the unique identifier) or other tagging means, i.e. looking up the relevant details of the material passport to be validated, checked, amended or added to.

At this point in the process a variety of tests may be performed as will be explained below. In particular, if a potential reuse of the removed structural member has already been established, e.g. through access to the database with data from the preliminary assessment, then the intended use for the structural member may be flagged and additional data fields for that member may be identified in the database that need to be populated, i.e. to validate, approve or certify the member for that specific reuse. Thus the database may specify the tests to be carried out.

Alternatively, if no specific reuse of the reclaimed member has been identified, the database may specify a standard set of tests to carry out, or data fields that need to be populated. This is so that the standard material passport for that steel member is sufficiently intact that the member can be certified or verified for a range of potential uses.

Thus in each scenario, the database may specify the material passport entries and/or test results required for the reclaimed structural member before it is suitable for reuse. Certain data fields may be populated from suitable records of the steel member that already exist. For data fields that require tests, they may include any or any combination of the following:
- further geometry assessment, e.g. checking of the straightness of the member, which may be done with a laser, to assess any deformation, such as buckling or twisting;
- non-destructive testing of yield strength and/or ultimate strength
- non-destructive testing of carbon or carbon equivalent value (CEV)
- non-destructive testing of hardness
- confirmation of steel grade

Non-destructive tests may be carried out for all reclaimed structural members entered into the database. Such tests may be applied to any reclaimed steel beams, e.g. including hot rolled and hollow-section products.

In different embodiments of the process, additional destructive testing may be carried out on at least some reclaimed members, e.g. as statistical or non-statistical destructive testing. As such a sample of material may be taken form one or more member for destructive testing, e.g. to confirm the NDT results or assess another property of the material, such as elongation/deformation properties of the material. An example testing procedure is below:

| **Consequence class** | **NDT to establish yield strength, ultimate strength and CEV** | **Minimum number of DT to establish yield strength, ultimate strength and CEV and elongation** | **Acceptance approach** |
|---|---|---|---|
| CC1 | **All members to be subject to non-destructive tests** | 1 | **Non-statistical (maximum value of CEV)** |
| **CC2** | | **1** | Statistical for yield strength, ultimate strength, and elongation (maximum value of CEV) |
| CC3 | | 3 | |

In order to undertake any such testing, a surface treatment of the reclaimed structural member may be removed in advance. This may remove only a small area of surface treatment required for the testing. Destructive testing may include extraction of a small sample, e.g. by cutting or drilling, from the steel member.

The results of the NDT and/or destructive tests are then compared to minimum or threshold values in order to verify material properties and/or grade of the steel. The measure values from testing may be processed prior to comparing to the threshold values, for example to ensure a margin of safety in the determination. In one example, mean/average values are reduced by a factor in order to return a minimum value for the recovered member. The reduction factor may be a multiple of the standard deviation, such as a multiple of 1.64 times the standard deviation. The processing may involve a coefficient of variation in one example.

The processing of the above type can be used for example in respect of yield strength (N/mm²) and/or ultimate strength (N/mm²) or any other characteristic used to characterise or verify the properties of the recovered member. The processing may result in determination of a minimum value for the structural member, which may then be compared to steel grade values to determine a steel grade of the recovered member.

The steel members undergo a processing treatment to remove any imperfections or regions not suitable for reuse, i.e., damaged or broken sections of the steel member. Localised trimming is performed to remove imperfections or size the member accordingly.

Sections that can't be reclaimed or repaired are separated for recycling.

The steel member database is updated accordingly to reflect any changes made to the steel member during the recovery process.

Once test results have revealed the members acceptability for a specific new project, the member will be transported to a production facility, e.g. on-site or off-site. Those members will pass through the different stages of preparation for re-use, which may include marking, cutting to length, drilling, fabricating with parts and/or hard stamping or other processing to create the desired section as per a fabrication drawing or member geometry specified for the new project.

Once fabricated the will typically undergo final inspection for accuracy. The member may move in sequence, e.g. along a production line, for welding if required. Once fully welded the member can be tested against the application for welds chosen (MPI or UT). If any defects are identified they will be rectified prior to the parts move into surface preparation.

Any, or all, members may undergo surface preparation prior to re-use or storage for re-use. Surface preparation by abrasive blasting may be performed to return the surface of the member back to a predetermined state or standard, e.g. back to SA2.5 standard (in line with BS EN ISO 8501-1). Again, this may be performed on the reclamation site or off-site as necessary. Surface preparation will take place within the confines of an enclosure, such as a modified container, to ensure grit/particulate reclaim and ventilation.

Once the surface has been prepared, e.g. blasted, the member will receive the surface coating/treatment (e.g. paint) required to achieve a given specification and then allowed to cure. This may be performed on site within a separate enclosure, such as a modified container for paint/coating retention and ventilation.

A test of the applied coating may then be undertaken. A WFT (wet film thickness) gauge check may be performed to obtain/assure the required coating. Once appropriate coats have been applied and cured, the member may receive a DFT (dry film thickness) test by a competent ICCOR inspector and then be moved to the designated holding area until required for installation.

Any or all or the above treatment steps may be updated in the database (i.e. the material passport) so that the status and processing of each member is verified, ready for reuse. Any omitted steps or fields in the database may be flagged and alerts issued so that the requisite data is obtained before the member is certified for a particular re-use.

### Transportation and storage

The recovered members are stored until they are ready to be re-used. They may be held in storage receptacle suitable for long term storage to prevent any degradation, for example, rusting. The storage receptacle may be mobile for example, a shipping container, such that members can be transported without disturbing individual members.

Where the steel members are to be reclaimed immediately after recovery, they can be placed on a trailer (or the like) and transported offsite.

The status of each member is tracked throughout the recovery process on the steel member database such that there is a reclaimed record which can be used for traceability.

### Composition testing

Where the composition or alloy of the steel member can be determined through mill certificates or CE marking, the steel member database can be updated accordingly.

Where no such certification is available, or there is doubt regarding the composition/alloy of members, composition testing can be conducted, e.g. offsite. This may involve one or a combination of mechanical or chemical testing steps performed on a piece of material from a steel member and sent to a UKAS accredited laboratory for non-destructive/destructive testing and analysis as per SCI-P427 section 7. This process will ensure the steel is independently assessed as a suitable specification for the intended reuse.

The material properties of the reclaimed steel shall be assessed through mechanical and chemical testing, according to BS EN 1090-2 clause 5.1. Where welding of the structure made from reclaimed steelwork is anticipated, the chemical composition shall be determined for use in preparing the welding procedure specification. Properties to be declared for the reclaimed steelwork shall include but not limited to:
- Steel grade (based on non-destructive tests result)
- Steel sub-grade (may be assumed to be JR, or from a destructive tests result)
- Tolerances (based on inspection)
- Maximum Carbon Equivalent (conservative assessment, or optional test).

The testing may include non-destructive testing methods, for example, hardness testing, positive metal identification, Instrumented indentation testing and small punch testing.

Destructive testing may include tensile testing, Chemical composition analysis, Charpy impact test and Metallography.

The results of the testing are matched against known properties of existing steel alloys and so the composition of the steel member is determined.

Once the composition alloy type has been identified, the steel member database is updated.

### Certification

Recovered steel that meets the required standards and tolerances of reclaimed steel works can be treated as new steel and CE marked in accordance with the specifications and guidance in BS EN 1090-1.

The steel shall be made traceable to a CE marked Type 3.1 certificate.
a) It shall be the responsibility of the steel fabricator to provide all Type 3.1 certificates result in compliance with BS EN 1090. These certificates shall contain the chemical and mechanical properties of the steel giving assurances that the reclaimed steelwork meets the specified properties.
b) The above certificate shall be endorsed by a third-party who will ensure that the right sample material has been issued for testing and shall witness the testing process.
c) a representative who will keep records of all test results and certifications issued by the steel fabricator.

Furthermore, reclaimed steel will also be issued with a Type 3.2 certificate which is countersigned and verified by independent third-party to validate the material has been satisfactorily reclaimed.

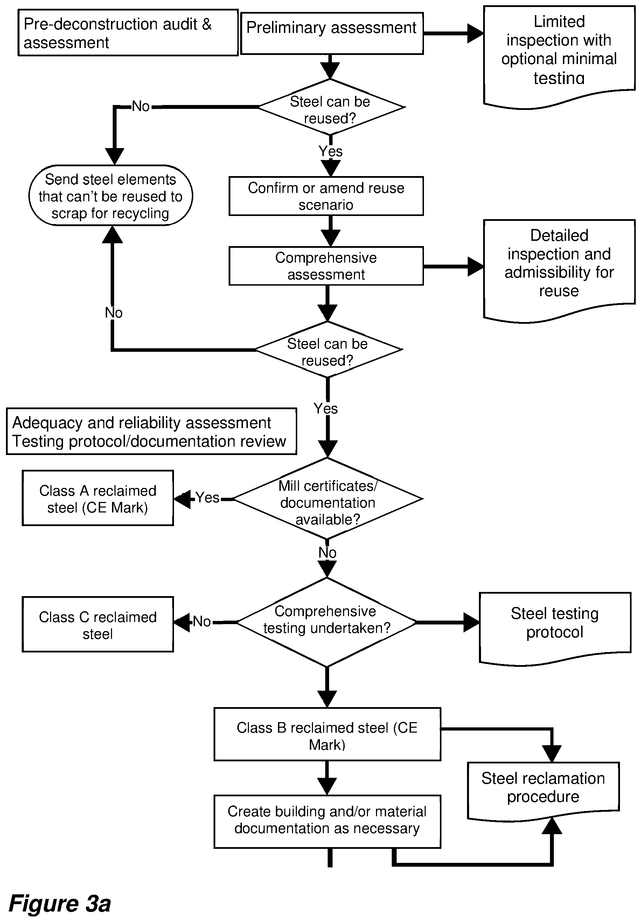

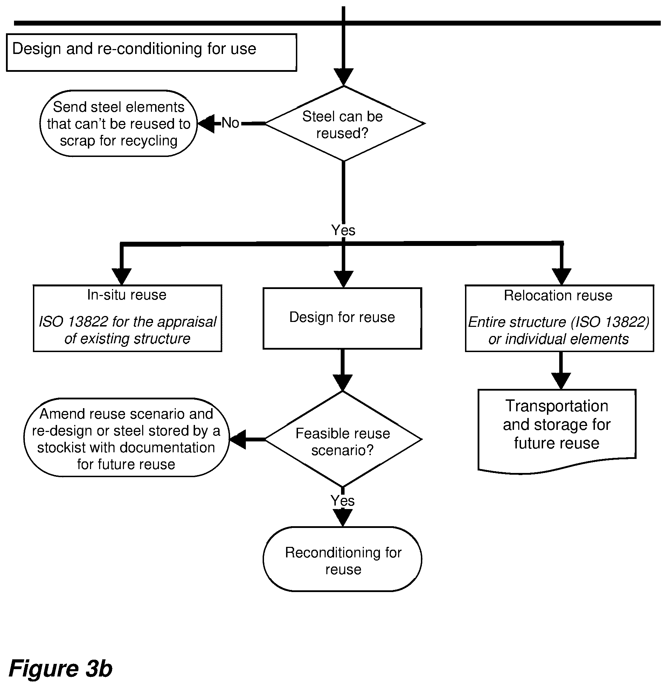

Figure 3 shows a flow chart further elaborating the process of reclaiming steel members described above.

A tailored contractual agreement can be drafted based on the selected steel members, populated fields in the steel member database and parties involved. neural AI or language models such as ChatGPT can be used to draft the agreement. The model connects to the steel member database and uses the populated fields as prompts to generate text/terms. For example, where international shipping is involved, relevant text pertaining to the terms of shipping and liability are generated. Furthermore, where fields are not populated, the model generates text indicating the liability for the relevant parties. For example, if the age of the steel is not populated in the steel member database, the agreement may indicate this is the case and create terms or declarations specifying which party does or doesn't have liability. Furthermore, the model can generate a definition list for terms in the agreement that may require explicit definitions, or where language may become an issue.

## Claims

1. A method of reclaiming structural members from an existing structure for reuse, comprising the steps of:
conducting a scan of the existing structure to determine the geometry, position, and one or more material property of the structural members in the structure,
assigning an identifier to structural members in the structure,
cataloguing the structural members in a structural member database against said identifier,
creating a demolition schedule based on the structural member database and reclaiming the structural members from the structure.

2. A method of reclaiming structural members according to claim 1, comprising conducting mechanical, geometric and/or chemical testing of the structural member once removed from the existing structure and updating the database with results of said testing.

3. A method of reclaiming structural members according to claim 2, wherein the testing comprises non-destructive testing to determine one or more of yield strength, hardness, carbon equivalent value and ultimate strength of the structural member.

4. A method of reclaiming structural members according to claim 2 or 3, wherein the testing comprises destructive testing on a material sample of the structural member.

5. A method of reclaiming structural members according to any preceding claim, wherein the steel grade of the structural member is determined or confirmed after removal from the existing structure.

6. A method of reclaiming structural members according to any preceding claim, where the location and/or geometry of the structural members is determined by conducting a point cloud scanning survey of the building.

7. A method of reclaiming structural members according to any preceding claim, where the composition and/or quality of the structural member is determined by conducting an X-Ray Fluorescence survey of the structural member.

8. A method of reclaiming structural members according to any preceding claim, where the demolition schedule includes specifying mechanical lifters, support members and/or handling equipment during the reclaiming process to remove the structural members from the structure being demolished.

9. A method of reclaiming structural members according to any of the previous claims, where demolition schedule specifies a sequential order for removal of the structural members from the existing structure and the structure is demolished after the structural members are reclaimed.

10. A method of reclaiming structural members according to any of the previous claims, where a sustainability audit of the structure is conducted to identify the suitability of the structural members for reclaiming, e.g. comprising determining the year of construction of the structure and/or age of the structural.

11. A method of reclaiming structural members according to any of the previous claims, wherein a reconditioning process is conducted on the structural member to resize the steel member, remove imperfections and/or treat the surface of the structural member.

12. A method of reclaiming structural members according to any of the previous claims, comprising searching the database to match a catalogued structural member against one or more criteria for suitability in a new structure, for example wherein the structural members are catalogued in the structural member database and/or the structural member database is searched prior to removal from the existing structure.

13. A method of reclaiming structural members according to any of the previous claims, comprising identifying the structural member as being capable of reuse based upon the scan of the structural member in situ in the existing structure, wherein the database identifies one or more data field for a property of the structural member that needs to be populated or verified prior to verification of the structural member for reuse.

14. A method of reclaiming structural members according to any preceding claim, wherein the structural member database comprises a material passport for each structural member comprising one or more material characteristic of the structural member, a historic use of the structural member and/or a record of any reprocessing of the structural member.

15. A method of reclaiming structural members according to any preceding claim, comprising:
interrogating the structural member database for structural members that satisfy a future need, and
verifying suitability of the structural members in the database for said future need and then reusing the steel members.
